(19) Europäisches Patentamt

European Patent Office

Office européen des brevets

(11) Veröffentlichungsnummer : **0 084 797**
**B1**

(12) **EUROPÄISCHE PATENTSCHRIFT**

(51) Int. Cl.⁴ : **G 11 B 5/702**

(45) Veröffentlichungstag der Patentschrift :
23.12.87

(21) Anmeldenummer : 83100179.7

(22) Anmeldetag : 12.01.83

(54) Verfahren zur Herstellung eines magnetischen Speichermediums mit strahlenhärtbaren Bindemitteln.

(30) Priorität : 14.01.82 DE 3200970

(43) Veröffentlichungstag der Anmeldung :
03.08.83 Patentblatt 83/31

(45) Bekanntmachung des Hinweises auf die Patenterteilung : 23.12.87 Patentblatt 87/52

(84) Benannte Vertragsstaaten :
DE FR GB IT NL

(56) Entgegenhaltungen :
WO-A-81 /026 46
FR-A- 2 120 184
GB-A- 2 057 471

(73) Patentinhaber : Agfa-Gevaert AG
Patentabteilung
D-5090 Leverkusen 1 (DE)

(72) Erfinder : Brinkmeyer, Herman, Dr.
Bodelschwinghstrasse 12
D-4150 Krefeld (DE)
Erfinder : Perrey, Hermann, Dr.
Auf der Rheinaue 8
D-4150 Krefeld (DE)
Erfinder : Hübler, Gerhard, Dr.
Hammersbacher Strasse 12
D-8000 München 70 (DE)
Erfinder : Nippe, Burkhard, Dr.
Krennerweg 20
D-8000 München 71 (DE)
Erfinder : Kober, Heinrich, Dr.
Georgstrasse 12
D-8021 Hohenschäftlarn (DE)

## Beschreibung

Die vorliegende Erfindung betrifft ein Verfahren zur Herstellung eines magnetischen Aufzeichnungsträgers mit einer magnetischen Schicht, hergestellt aus olefinisch ungesättigten, strahlenhärtenden Bindemitteln und magnetischem Pigment.

Magnetische Aufzeichnungsträger wie z. B. Magnetbänder bestehen aus einer Trägerfolie, auf die eine Dispersion von Magnetpigment in einem Bindemittel aufgebracht ist. Für hochwertige Magnetbänder werden als Bindemittel neben thermoplastischen Harzen wie verschiedene Mischpolymerisate, Urethanelastomere, Polyester oder Polyamide auch solche Harze verwendet, die mit polyfunktionellen Icoxyanaten vernetzt werden können. Beispielsweise seien höhermolekulare Polyhydroxylverbindungen genannt, wie partiell verseifte Vinylchlorid-Vinylester-Copolymerisate, Copolymerisate von Vinylchlorid mit hydroxylgruppenhaltigen olefinisch ungesättigten Monomeren wie Allylalkohol und Hydroxyalkyl(meth)-acrylate, hydroxylgruppenhaltige Polyester- und Polyurethanharze. Beschrieben sind derartige Systeme beispielsweise in den Deutschen Auslegeschriften 11 06 959 und 12 82 700.

Da die Isocyanatreaktion schon bei Raumtemperatur abläuft, je nach Reaktivität der Isocyanate mit unterschiedlicher Geschwindigkeit, weisen Magnetdispersionen mit diesen herkömmlichen vernetzenden Bindemitteln nur eine kurze Topfzeit auf. Weitere Nachteile bestehen darin, daß die Isocyanatreaktion von der durch die Lackkomponenten eingeschleppten Feuchte im Lack und von der Luftfeuchtigkeit beeinflußt wird und damit die Produktion von magnetischen Aufzeichnungsträgern gleichbleibender Qualität erschwert ist und daß zur Vervollständigung der Isocyanatreaktion eine aufwendige Nachbehandlung, d. h. Lagerung in temperierten und klimatisierten Räumen, der mit diesen herkömmlichen Bindemitteln erzeugten magnetischen Aufzeichnungsträgern erforderlich ist.

In der DE-OS 30 29 818 werden Bindemittel für magnetische Aufzeichnungsträger beansprucht, die eine verbesserte Topfzeit aufweisen. Diese wird dadurch erzielt, daß der sonst zur Vernetzung erforderliche übliche Isocyanatüberschuß reduziert werden kann durch die Verwendung strahlenhärtender Bindemittel, bestehend aus einer Mischung eines Polyisocyanates und eines aktiven Wasserstoff enthaltenden Monomeren, Oligomeren oder Polymeren und/oder eines aktiven Wasserstoff und auch wenigstens eine ungesättigte Bindung pro Molekül enthaltenden Monomeren, Oligomeren oder Polymeren.

Mit dieser Bindemittelmischung kann eine Magnetpigment enthaltende Dispersion erstellt werden, die, wie in den Beispielen der DE-OS 30 29 818 ausgeführt, nach Auftrag beispielsweise auf eine Trägerfolie getrocknet, kalandert und einer 24-stündigen Wärmehärtung bei 60 °C unterzogen wird. Anschließend wird zur ausreichenden Vernetzung eine Elektronenstrahlhärtung durchgeführt.

Mit der in dieser Patentanmeldung beschriebenen Binderformulierung kann eine verbesserte Topfzeit gegenüber herkömmlichen Systemen erzielt werden, jedoch ist auch hier das Problem der beschränkten Topfzeit nicht vollständig beseitigt. Abgesehen von der aufwendigen Vorvernetzung mittels Wärme, ist hier, infolge der prinzipiellen Empfindlichkeit der Isocyanatreaktion gegenüber Luftfeuchtigkeit, das Problem der Herstellung von hochwertigen magnetischen Aufzeichnungsträgern stets gleichbleibender Güte nicht gelöst.

In der DE-OS 30 29 819 wird ein strahlengehärtetes magnetisches Aufzeichnungsmedium beansprucht, das mit einer Binderformulierung, bestehend aus einer .eine Mehrzahl von ungesättigten Bindungen in ihrem Molekül aufweisenden Acrylverbindung und einem thermoplastischen Harz, erhalten wird. Aus einer solcher Binderformulierung und einem magnetischen Pigment sowie weiteren Zusätzen kann unter Verwendung eines Lösungsmittels oder Lösungsmittelgemisches eine Magnetdispersion hergestellt werden. Niedermolekulare, flüchtige Acrylverbindungen in der Binderformulierung haben jedoch den Nachteil, daß sie sich beim Trocknen der aufgetragenen Magnetdispersion in den zurückgewonnenen Lösungsmitteln anreichern, und damit eine Wiederverwendung der Lösungsmittel ohne entsprechende Aufarbeitung nicht zulassen. Zusätzlich wird durch diese Verluste an Acrylverbindungen in der Binderformulierung beim Vernetzen mit Elektronenstrahlen eine uneinheitliche Vernetzungsdichte erzielt. Außerdem kommt es durch die Bestrahlung im wesentlichen nur zu einer Eigenvernetzung des Acrylatanteils.

Weitere Probleme ergeben sich aus dem Verhältnis Oligoacrylat zu thermoplastischem Harz. Ist das Verhältnis klein, so besteht aufgrund der geringen Doppelbindungsdichte die Gefahr, daß bei den durch die hohen Productionsgeschwindigkeiten bedingten geringen Strahlungsdosen eine nur unzureichende Vernetzung erreicht wird, während bei großem Verhältnis die Magnetschicht ungeeignete mechanische Eigenschaften wie Versprödung und geringe Haftung auf einer Trägerfolie aufweist. Ein weiterer Nachteil bei Verwendung einer Binderformulierung mit hohem Anteil an Oligoacrylat besteht in der Klebrigkeit der ungehärteten Magnetschicht, so daß die erforderliche Kalanderung nur nach einer apparativ aufwendigen und kostspieligen Vorvernetzung mit ionisierenden Strahlen möglich ist. Im Anschluß an die Kalanderung muß der magnetische Aufzeichnungsträger zur Vervollständigung der Vernetzung nochmals bestrahlt werden.

In der Deutschen Auslegeschrift 21 00 037 werden magnetische Aufzeichnungsträger beschrieben, die durch Bestrahlen mittels ionisierender Strahlen einer Magnetdispersion, bestehend aus einer strahlenhärtenden Acryl- und/oder Methacrylgruppen enthaltenden Binderformulierung mit einer Viskosität zwischen 0,05 und 3 Pa · s (20 °C) und einem magnetischen Pigment, erhalten werden. Eine Kalanderung, wie sie bei der Magnetbandherstellung erforderlich ist, führt mit den in dieser Patentschrift beschriebenen Binderformulierungen zu erheblichen Problemen und ist in der Regel nur nach technisch aufwendiger Vorvernetzung möglich.

Durch die WO 81/02646 sind magnetische Aufzeichnungsmedien bekannt geworden, die unter Verwendung einer Kombination strahlenhärtbarer Bindemittel A, B und ggf. C hergestellt werden. Das Bindemittel 1 besitzt ein Molekulargewicht größer als 5 000, das Bindemittel B weist ein Molekulargewicht zwischen 400 und 5 000 auf und das Bindemittel C hat ein Molekulargewicht unter 400. Eine Kombination aus den Bindemitteln A und C ist aus den schon zuvor geschilderten Gründen nicht bevorzugt.

Zur Erzielung einer ausreichenden Reaktivität der strahlenhärtbaren Binderformulierung werden hier reaktionsverbessernde, strahlenhärtende Oligomere B mitverwendet. Klarlackfilme von solchen strahlengehärteten Binderformulierungen zeigen jedoch, daß die Filme nur eine unzureichende Elastizität aufweisen. Dieses ist von besonderem Nachteil, da bekanntlich der hohe Pigmentgehalt, wie er bei magnetischen Aufzeichnungsmedien verwendet wird, die Elastizität der Beschichtungen noch zusätzlich drastisch vermindert. Bezüglich der Dispergierung werden solche Binderformulierungen ferner der Forderung nach einer möglichst engen Molekulargewichtsverteilung der Bindemittel nicht gerecht.

Aufgabe der vorliegenden Erfindung ist es, mittels energiereicher Strahlen härtbare Bindemittel für magnetische Aufzeichnungsträger zur Verfügung zu stellen, die die zuvor angeführten Nachteile wie begrenzte Topfzeit, Flüchtigkeit, Klebrigkeit, unvollständige Vernetzung, Versprödung, unzureichende Elastizität und ungünstige Dispergiereigenschaften nicht aufweisen und Magnetschichten mit hervorragenden mechanischen Eigenschaften bei geringen Strahlungsdosen ergeben und damit eine vorteilhafte technische Produktion von magnetischen Aufzeichnungsträgern ermöglicht.

Die zuvor geschilderten Nachteile können überwunden werden, wenn zur Herstellung eines magnetischen Speichermediums olefinisch ungesättigte, strahlenhärtbare Bindemittel verwendet wird, das ein über Urethan-, Allophan- und/oder Harnstoffbrücken kettenend- und kettenseitenständigen Acryloyl- und/oder Methacryloylgruppen aufweisendes Polyurethan mit einem mittleren Molekulargewicht $\bar{M}_W$ von 10 000 bis 200 000 (Gewichtsmittel) ist, oder daß das vorstehend genannte Bindemittel B in Kombination mit einem an sich bekannten Bindemittel A eingesetzt wird, das ein Acryloyl- und/oder Methacryloylgruppen enthaltendes Polymeres ist und durch Umsetzung eines aktiven Wasserstoff enthaltenden Polymeren mit einem mittleren Molekulargewicht $\bar{M}_W$ von 10 000 bis 200 000 (Gewichtsmittel) und einem polyfunktionellen Isocyanat und einem Hydroxyalkylacrylat und/oder Oligoacrylat und/oder Oligomethacrylat hervorgegangen ist, und daß die Bindemittel und magnetisches Pigment enthaltende Dispersion durch Elektronenstrahlen gehärtet wird.

Die der Erfindung zugrunde liegenden Bindemittel A sind Acryloyl- und/oder Methacryloylgruppen enthaltende Polymere, die aus einem aktiven Wasserstoff enthaltenden Polymeren hervorgehen wie z. B. Alkydharze, Polyester, ungesättigte Polyester, Polyether, Polyepoxide, Polyacrylate, Phenolharze, Polyamide, Melaminharze, Harnstoffharze, Silikonharze, Cellulosen, insbesondere jedoch partiell verseifte Vinylchlorid-Vinylester-Copolymere und Copolymerisate von Vinylchlorid und Allylalkohol und/oder Hydroxyalkyl(meth)acrylaten.

Träger für den aktiven Wasserstoff in diesen Polymeren sind Carboxyl-, primäre und sekundäre Amino-, Mercapto- und Hydroxylgruppen.

Die polyfunktionellen Isocyanate können jegliche organische Isocyanatverbindungen sein, die mindestens zwei freie Isocyanatgruppen aufweisen. Vorzugsweise werden di- und trifunktionelle Isocyanatverbindungen sowie Gemische dieser verwendet.

Beispielhaft seien genannt : Toluylendiisocyanat, Diphenylmethandiisocyanat, Isophorondiisocyanat, Xylendiisocyanat, Hexamethylendiisocyanat, Triphenylmethantriisocyanat, die Produkte erhalten durch Reaktion von Trimethylolpropan und Diisocyanaten im Verhältnis 1 : 3 und die Triisocyanate, die durch Reaktion von Diisocyanaten mit Wasser erhalten werden.

Als weitere Reaktionskomponente werden Hydroxylgruppen enthaltende Hydroxyalkyl(meth)acrylate und/oder Hydroxylgruppen enthaltende Oligo(meth)acrylate mit 1 bis 3, vorzugsweise 2 bis 3, (Meth)Acryloylgruppen pro Molekül. Besonders bevorzugt sind die Ester der Acrylsäure. Beispielhaft seien genannt :

2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat, 4-Hydroxybutylmethacrylat, 3-Chlor-2-hydroxypropylacrylat, 3-Chlor-2-hydroxypropylmethacrylat, 6-Hydroxyhexylacrylat, 6-Hydroxyhexylmethacrylat, Glycerindiacrylat, -dimethacrylat, Trimethylolpropandiacrylat, -dimethacrylat, Pentaerythrittriacrylat, -trimethacrylat sowie die Ester der Acrylsäure oder Methacrylsäure der oxethylierten oder oxpropylierten Alkohole.

Bevorzugt sind Kombination aus Isocyanaten und Hydroxylgruppen enthaltenden Hydroxyalkyl(meth)acrylaten und/oder Oligo(meth)acrylaten, die zu 2 bis 3, vorzugsweise 2 (Meth)Acryloylgruppen pro Seitenkette führen. Solche Kombinationen sind zum Beispiel 1 Mol 2,4-Toluylendiisocyanat und 1 Mol Trimethylolpropandiacrylat oder 1 Mol Triphenylmethantriisocyanat und 2 Mol Hydroxyethylacrylat ; jede Kombination jeweils auf 1 Mol aktiven Wasserstoff eines Polymeren bezogen.

Die Umsetzung kann in der Art erfolgen, daß das aktiven Wasserstoff enthaltende Polymere und Hydroxyalkyl(meth)acrylat oder eine Hydroxylgruppe pro Molekül enthaltende Oligoacrylat vorgelegt

3

werden und das Isocyanat zugesetzt wird.

Bevorzugt ist jedoch ein zweistufiges Verfahren, in dessen erster Stufe die Umsetzung des polyfunktionellen Isocyanats mit einem Hydroxyalkyl(meth) acrylat und/oder einem eine Hydroxylgruppe pro Molekül enthaltenden Oligo(meth) acrylat erfolgt, vorzugsweise in einem solchen Verhältnis, daß lediglich eine Isocyanatgruppe pro Molekül verbleibt. In einer zweiten Stufe erfolgt die Umsetzung mit dem aktiven Wasserstoff enthaltenden Polymeren. Im allgemeinen werden diese Umsetzungen, insbesondere die zweite Stufe, in Gegenwart eines Lösungsmittels bzw. Lösungsmittelgemisches durchgeführt, das nicht zur Reaktion mit freiem Isocyanat befähigt ist, wie z. B. Tetrahydrofuran, Dioxan, Aceton, Butanon, Cyclohexanon, Methylisobutylketon, Cyclohexan, Toluol, Methylenchlorid, Ethylenglykoldimethylether, Ethylacetat, Butylacetat, Dimethylformamid, Dimethylsulfoxid u. a.

Die Reaktionstemperaturen betragen bei diesen Umsetzungen im allgemeinen 20-90 °C, jedoch lassen sich unter Umständen auch höhere Temperaturen anwenden.

Die Umsetzung der Polyisocyanate mit den aktiven Wasserstoff enthaltenden Polymeren und eine Hydroxylgruppe pro Molekül enthaltenden Hydroxyalkyl(meth) acrylaten und/oder Oligo(meth) acrylaten kann in an sich bekannter Weise, z. B. mit Zinnoctoat, Dibutylzinndilaurat oder tert. Aminen, katalysiert werden.

In den Binderformulierungen wird Bindemittel A nur in Kombination mit Bindemittel B oder ausschließlich Bindemittel B benutzt, das ein Polyurethan ist und über Urethan-, Allophan- und/oder Harnstoffbrücken kettenend- und kettenseitenständig (Meth) Acryloylgruppen trägt. Das Kettengerüst ist ein Polyurethan.

Solche Polyurethane werden durch Umsetzung eines aliphatischen und/oder aromatischen Diisocyanats mit einer kettenverlängernden Dihydroxyverbindung erhalten.

Als aliphatische und aromatische Diisocyanate seien beispielsweise genannt : Butylen-1,4-diisocyanat, Hexamethylendiisocyanat, Polymethylendiisocyanat, 2,4-Toluylendiisocyanat, 2,6-Toluylendiisocyanat, Diphenylmethan-4,4'-diisocyanat sowie die Isomeren und Isomerengemische, p-Phenylendiisocyanat, m-Phenylendiisocyanat und 2,4-Naphthalindiisocyanat.

Als kettenverlängernde Dihydroxyverbindungen seien belspielhaft aufgeführt : Ethylenglykol, Propandiol-1,2, Propandiol-1,3, Butandiol-1,2, Butandiol-1,4, Hexandiol-1,6, 1,4-Bis-(hydroxymethyl) cyclohexan, 1,4-Dihydroxycyclohexan, Diethylenglykol, Triethylenglykol, Octaethylenglykol, Bis-(2-hydroxyethyl) methylamin und auch lineare, auf Hydroxylgruppen endende Polyester aus beispielsweise den zuvor genannten Dihydroxyverbindungen und einer der bekannten aliphatischen, cycloaliphatischen oder aromatischen Dicarbonsäure wie z. B. Bernsteinsäure, Glutarsäure, Adipinsäure, Korksäure, 1,4-Cyclohexandicarbonsäure, Hexahydrophthalsäure, Phthalsäure, Terephthalsäure, Fumarsäure, Maleinsäure u. a.

Die Polyurethane können auch kleinere Anteile von Harnstoffsegmenten aufweisen, die dadurch erhalten werden, daß Verbindungen wie beispielsweise 2-Methylaminoethanol, N,N'-Dimethylethylendiamin und primäre Amine wie Butylamin oder Hexylamin mit verwendet werden.

Auch können im geringen Umfang, bezüglich einer Isocyanatreaktion, trifunktionelle Verbindungen eingesetzt werden wie zum Beispiel Glycerin, Trimethylolpropan, 2-Aminoethanol, Bis-(2-hydroxyethyl) amin u. a. Bevorzugt sind solche Verbindungen wie zum Beispiel Glycerin und 2-Aminoethanol, die aktive Wasserstoffatome unterschiedlicher Reaktivität gegenüber Isocyanaten.

Durch den Einsatz eines geringen Überschußes der Dihydroxyverbindungen kann in einer Polyadditionsreaktion das Molekulargewicht der entstehenden Polyurethane geregelt werden, und es werden außerdem hydroxylgruppenendständige Polyurethane erhalten. Diese endständigen Hydroxylgruppen, die aktiven Wasserstoffatome der Urethanbindungen und die, die durch die trifunktionellen Verbindungen bedingt sind, können mit polyfunktionellen Isocyanaten und eine Hydroxylgruppe pro Molekül enthaltenden Hydroxyalkyl(meth) acrylaten und/oder Oligo(meth) acrylaten umgesetzt werden, wie dieses bereits unter dem Abschnitt über das Bindemittel A ausgeführt worden ist.

Bevorzugt ist auch hier ein zweistufiges Verfahren, in dessen erster Stufe die Umsetzung des polyfunktionellen Isocyanats mit einem Hydroxyalkyl(meth) acrylat und/oder einem eine Hydroxylgruppe pro Molekül enthaltenden Oligo(meth) acrylat erfolgt, vorzugsweise in einem solchen Verhältnis, daß lediglich eine Isocyanatgruppen pro Molekül verbleibt. In einer zweiten Stufe erfolgt die Umsetzung mit dem aktiven Wasserstoff enthaltenden Polyurethanen. Im allgemeinen werden diese Umsetzungen, insbesondere die zweite Stufe, in Gegenwart eines Lösungsmittels bzw. Lösungsmittelgemisches durchgeführt, das nicht zur Reaktion mit freiem Isocyanat befähigt ist, wie z. B. Tetrahydrofuran, Dioxan, Aceton, Butanon, Cyclohexanon, Methylisobutylketon, Cyclohexan, Toluol, Methylenchlorid, Ethylenglykoldimethylether, Ethylacetat, Butylacetat, Dimethylformamid, Dimethylsulfoxid u. a.

Die Reaktionstemperaturen betragen bei diesen Umsetzungen im allgemeinen 20-90 °C, jedoch lassen sich unter Umständen auch höhere Temperaturen anwenden.

Die Umsetzung der Polyisocyanate mit den aktiven Wasserstoff enthaltenden Polyurethanen und eine Hydroxylgruppe pro Molekül enthaltenen Hydroxyalkyl(meth) acrylaten und/oder Oligo(meth) acrylaten kann in an sich bekannter Weise, z. B. mit Zinnoctoat, Dibutylzinndilaurat oder tert. Aminen, katalysiert werden.

Eine weitere vorteilhafte Methode der Herstellung von (Meth)-Acryloylgruppen enthaltenden Polyurethanen vom Typ des Bindemittels B besteht darin, bezüglich aktive Wasserstoffatome, difunktionelle Urethan(methan) acrylate als Kettenverlängerer mit difunktionellen Isocyanaten umzusetzen.

Solche aktive Wasserstoffatome enthaltenden difunktionelle Urethan(meth) acrylate werden durch Umsetzung eines wenigstens difunktionellen Isocyanats mit einem eine Hydroxylgruppe pro Molekül enthaltenden Hydroxyalkyl(meth) acrylat und/oder Oligo(meth)-acrylat und eine bezüglich aktive Wasserstoffatome trifunktionelle Verbindung erhalten.

Geeignete Polyisocyanate und eine Hydroxylgruppe pro Molekül enthaltende Hydroxyalkyl(meth) acrylate und Oligo(meth) acrylate sind bereits zuvor beschrieben worden. Als trifunktionelle aktive Wasserstoffatome tragende Verbindungen seien beispielsweise Glycerin, Trimethylolpropan, Pentaerythrit, Bis-(2-hydroxyethyl) amin, 2-Aminoethanol genannt. Bevorzugt sind auch hier Verbindungen von Glycerin, 2-Aminoethanol und Bis-(2-hydroxyethyl) amin, die aktive Wasserstoffatome mit einer abgestuften Reaktivität gegenüber Isocyanaten haben.

Bevorzugt erfolgt die Umsetzung derart, daß in einer ersten Stufe ein wenigstens difunktionelles Isocyanat mit einem eine Hydroxylgruppe pro Molekül enthaltenden Hydroxyalkyl(meth) acrylat und/oder Oligo(meth) acrylat in einem solchen Molverhältnis umgesetzt werden, daß ein Mol Isocyanat pro Mol Umsetzungsprodukt verbleibt. In einer zweiten Stufe wird das verbliebene Isocyanat mit einer der schon zuvor beispielhaft aufgeführten trifunktionellen Verbindung im Molverhältnis 1 : 1 umgesetzt. Die Reaktionstemperaturen liegen im allgemeinen zwischen 20 und 90 °C. Durch die bekannten Katalysatoren können die Umsetzungen beschleunigt werden. Zur Viskositätsregelung können die Umsetzungen in den bereits genannten inerten Lösungsmitteln durchgeführt werden.

Diese als Kettenverlängerer wirkenden Urethan(meth) acrylate können allein oder in Kombination mit den bereits zuvor beispielhaft genannten Dihydroxyverbindungen und den difunktionellen Isocyanaten in einer Polyadditionsreaktion umgesetzt werden. Ebenso können Verbindungen wie beispielsweise 2-Methylaminoethanol, N,N-Dimethylethylendiamin, primäre Amine wie Butylamin und Hexylamin sowie auch verzweigend wirkende Verbindungen wie zum Beispiel Glycerin, Trimethylolpropan, 2-Aminoethanol, Bis-(2-hydroxyethyl) amin in geringem Umfang mitverwendet werden.

Das Molekulargewicht dieser Polyurethane kann durch einen Überschuß der kettenverlängernd wirkenden Verbindungen geregelt werden oder durch Zusatz einer monofunktionell wirkenden Verbindung wie z. B. Methanol, Ethanol, Cyclohexanol, Butylamin.

Ebenso wie die Herstellung der difunktionellen Urethan-(meth)-acrylate, kann auch die Polyadditionsreaktion durch die bereits beispielhaft beschriebenen Katalysatoren beschleunigt werden.

Die Reaktionstemperaturen betragen 20° bis 90 °C, jedoch können nötigenfalls höhere Temperaturen angewendet werden, soweit das die als Reaktionsmedium verwendeten inerten Lösungsmittel bzw. Lösungsmittelgemische zulassen. Geeignete Lösungsmittel sind z. B. Tetrahydrofuran, Dioxan, Aceton, Butanon, Cyclohexanon, Methylisobutylketon, Cyclohexan, Toluol, Methylenchlorid, Ethylenglykoldimethylether, Ethylacetat, Butylacetat, Dimethylformamid, Dimethylsulfoxid.

Eine weitere Methode der Herstellung eines Polyurethans vom Typ des Bindemittels B besteht darin, daß in der zuvor beschriebenen Polyadditionsreaktion ein difunktionelles Isocyanat verwendet wird, das durch Umsetzung eines wenigstens trifunktionellen Isocyanats mit einem eine Hydroxylgruppe pro Molekül enthaltenden Hydroxyalkyl(meth) acrylat und/oder Oligo(meth) acrylat erhalten wird, wobei das Molverhältnis von Isocyanat zu Hydroxylverbindung so gewählt wird, daß zwei Isocyanatgruppen pro Molekül erhalten bleiben. Zum Beispiel können solche Verbindungen durch Umsetzung von 1 Mol Triphenylmethan-triisocyanat mit 1 Mol 2-Hydroxyethylacrylat erhalten werden.

Diese (Meth) Acryloylgruppen tragenden difunktionellen Isocyanate können allein oder in Kombination mit den bereits beschriebenen nicht modifizierten difunktionellen Isocyanaten in einer Polyadditionsreaktion eingesetzt werden.

Sofern die bei der Herstellung der (meth) acryloylhaltigen Bindemittel A und B zugegebenen Inhibitoren und Antioxidantien, die in Mengen von je 0,001-0,1 Gew.% bezogen auf die Gesamtmischung zugesetzt werden, noch keine ausreichende Dunkellagerstabilität gewährleisten, kann mit diesen Inhibitoren und Antioxidantien eine Nachstabilisierung durchgeführt werden.

Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1-6 C-Atomen enthalten, Amine, vorzugsweise sekundäre Acrylamine und ihre Derivate, Chinone, Kupfer-I-Salze organischer Säuren oder Anlagerungsverbindungen von Kupfer(I) halogeniden an Phosphite.

Namentlich seien genannt : 4,4′-Bis-(2,6-di-tert.-butylphenol) ; 1,3,5-Trimethyl-2,4,6-tris-(3,5-di-tert.-butyl-4-hydroxy-benzyl)-benzol, 4,4′-Butyliden-bis-(6-tert.-butyl-m-kresol), 3,5-Di-tert.-butyl-4-hydroxy-benzylphosphonsäurediethylester, N,N′-Bis-(β-naphtyl)-p-phenylendiamin, N,N′-Bis-(1-methylheptyl)-p-phenylendiamin, Phenyl-β-naphthylamin, 4,4′-Bis-(α,α-dimethylbenzyl)-diphenylamin, 1,3,5-Tris-(3,5-di-tert.-butyl-4-hydroxy-hydrocinnamoyl)-hexahydro-s-triazin, Hydrochinon, p-Benzochinon, 2,5-Di-tert.-butylchinon, Toluolhydrochinon, p-tert.-Butyl-brenzcatechin, 3-Methylbrenzcatechin, 4-Ethylbrenzcatechin, Chloranil, Naphthochinon, Kupfernaphthenat, Kupferoctoat, Cu(I) Cl/Triphenylphosphit, Cu(I)Cl/Triphenylphosphit, Cu(I)Cl/Trichlorethyl-phosphit, Cu(I)Cl/Tripropylphosphit, p-Nitrosodimethylanilin.

Weitere geeignete Stabilisatoren sind in « Methoden der organischen Chemie » (Houben-Weyl), 4. Auflage, Band XIV/1, S. 433-452, 756, Georg Thieme Verlag ; Stuttgart, 1961, beschrieben.

Zur Herstellung einer erfindungsgemäßen magnetischen Aufzeichnungsschicht werden (meth) acryloylhaltige Bindemittel A in Kombination mit (meth) acryloylhaltigen Bindemittel B oder nur (meth) acryloylhaltige Bindemittel B mit einem magnetischen Pigment unter Verwendung eines Lösungsmittels oder Lösungsmittelgemisches nach bekannten Verfahren angerieben und vermahlen.

Als Magnetpigment kommen alle für Speicherzwecke geeigneten Stoffe in Betracht, wie $\gamma$-Fe$_2$O$_3$, Mischkristalle aus $\gamma$-Fe$_2$O$_3$ und Fe$_3$O$_4$, cobalt-dotiertes $\gamma$-Fe$_2$O$_3$ oder Fe$_3$O$_4$, CrO$_2$, Bariumferrit, ferrimagnetische Legierungen wie Fe-Co, Co-Ni, Fe-Co-Ni, Fe-Co-B, Fe-Co-Cr-B, Mn-Bi, Mn-Al, Fe-Co-V, Eisennitrid oder Gemische dieser Stoffe.

Zum Einstellen einer geeigneten Verarbeitungsviskosität können neben den schon genannten aprotischen Lösungsmitteln bzw. Lösungsmittelgemischen auch protische Lösungsmittel verwendet werden, wie z. B. Ethanol, Isopropanol, Butanol u. a.

In der Regel wird man zur Herstellung der Magnetdispersion Dispergierhilfsmittel einsetzen, die in jedem Fall auf das vorgelegte Pigment, das Lösungsmittel und die übrigen Rezepturbestandteile sowie die Eigenschaften der fertigen Schicht abgestimmt sein müssen. Die Auswahl erfolgt aus der Vielzahl bekannter oberflächenaktiver Verbindungen, wie z. B. Lecithin, Cephalin, Fettsäureamide oder -diamide bzw. deren Ammoniumsalze, ethoxylierte Fettsäurederivate, aliphatische oder aromatische ggf. ethoxylierte Phosphorsäureester, Sulfobernsteinsäureester, Sorbitan-Ester, aliphatische oder aromatische Sulfonsäuren oder Sulfonate, Fettalkoholsulfate und andere mehr.

Weitere Rezepturbestandteile können je nach den gewünschten Eigenschaften der Dispersion oder der fertigen Schicht Verwendung finden. In Frage kommen vor allem Gleitmittel wie z. B. Fettsäuren oder Fettsäurederivate, Silikonöle, Paraffine, Wachse, fluorierte Öle, Dispersionen von Polytetrafluorethylen. Mögliche andere Zusätze sind beispielsweise Weichmacher, Schleifmittel, viskositätsregulierende Stoffe u. a.

Die Herstellung der Beschichtungsdispersion erfolgt in bekannter Weise durch Vermischen des magnetischen Materials mit einem geeigneten Lösemittel durch Kneter, Rührer, Dissolver, oder mittels anderer Mischaggregate. Das Lösemittel kann das gelöste Bindemittel ganz oder nur Teile davon enthalten, ebenso Dispergatoren oder andere Additive. Die vorgemischte Dispersion wird üblicherweise bis zur ausreichenden Verteilung des magnetischen Pigments einem Mahlprozeß unterworfen. Die Mahlung erfolgt z. B. in Kugelmühlen, Perlmühlen, Sandmühlen o. ä. Ggf. werden restliche Bindemittelanteile oder Additive nach Beendigung des Mahlvorganges zugemischt.

Die Auftragung der Magnetdispersion erfolgt unter Beaufschlagung mit einem Magnetfeld mittels eines geeigneten Aggregats (Reverse-Roll-Coater, Rasterdrucker, Extrudergießer) auf einen nicht magnetisierbaren Träger, der beispielsweise aus einem Polyester wie Polyethylenterephthalat, einem Polyolefin wie Polypropylen, einem Celluloseester wie Cellulosediacetat oder Cellulosetriacetat, einem Polycarbonat, Polyamid, Polyimid, aus Papier, einer Metallfolie, aus Aluminium oder Kupfer oder auch anderem Material bestehen kann.

Nach Abdampfen der Lösungsmittel kann die ungehärtete magnetische Aufzeichnungsschicht einer Kalanderung unterzogen werden und anschließend mit ionisierenden Strahlen (Elektronen-, Neutronen-, Gamma-, Röntgenstrahlen) gehärtet werden. Vorzugsweise erfolgt die Aushärtung durch Elektronenstrahlen mit einer Strahlungsdosis von 0,5-25 Mrad, insbesondere von 0,5-10 Mrad. Um eine ausreichende Tiefenhärtung zu erzielen, sollte die Beschleunigerspannung nicht unter 100 kV liegen.

Eine höhere Beschleunigerspannung ermöglicht, insbesondere bei Bandmaterial, das gleichzeitige und sehr wirtschaftliche Aushärten mehrerer Bandlagen unter einer Strahlungsquelle, so daß hohe Produktionsgeschwindigkeiten erzielt werden können.

Nachfolgend wird die Erfindung anhand von Beispielen und zwei Tabellen näher erläutert :

Beispiel 1

Bindemittel A

In einer Rührapparatur werden zu 286 g polyfunktionellem aliphatischen Polyisocyanat (Desmodur N$^R$, hergestellt von Fa. Bayer AG) und 0,16 g Phenothiazin unter Durchleitung von Luft bei 60 °C langsam 139 g Hydroxyethylacrylat zugetropft. Nach vollständiger Zugabe wird die Temperatur bei 60 °C gehalten bis der Isocyanat gehalt auf 6 % gefallen ist. Anschließend werden 1 644 g Butanon, 2,2 g Zinn(II) octoat und 460 g teilhydrolysiertes Copolymerisat aus Vinylchlorid und Vinylacetat (VAGH, hergestellt von UCC Co. Ltd.) mit einem mittleren Molekulargewicht $\bar{M}_W$ von 105 000 (durch Lichtstreumessungen bestimmt) eingerührt. Die Umsetzung wird solange bei 60 °C durchgeführt, bis kein Isocyanat mehr nachgewiesen werden kann. Der Festgehalt wird zu 35 % bestimmt.

Beispiel 2

Bindemittel A

In einer Rührapparatur werden zu 122,1 g Isophorondiisocyanat und 0,15 g Phenothiazin unter Durchleitung von Luft bei 60 °C langsam 293,7 g oxethyliertes Trimethylolpropandiacrylat (Oxethylierungsgrad 3,7) zugetropft. Nach vollständiger Zugabe wird die Temperatur bei 60 °C gehalten bis der Isocyanatgehalt auf 6,9 % gefallen ist.

Anschließend werden 1 731 g Butanon, 1,85 g Zinn(II) octoat und 326 g teilhydrolysiertes Copolymerisat aus Vinylchlorid und Vinylacetat (VAGH, hergestellt von UCC Co. Ltd.) mit einem mittleren Molekulargewicht $\bar{M}_W$ von 105 000 (durch Lichtstreumessung bestimmt) eingerührt. Die Umsetzung wird solange bei 60 °C durchgeführt, bis kein Isocyanat mehr nachgewiesen werden kann. Der Festgehalt wird zu 30 % bestimmt.

Beispiel 3

Bindemittel B ·

Zu 66,6 g Isophorondiisocyanat und 0,17 g Phenothiazin in einer Rührapparatur werden bei 60 °C und unter Rühren und Durchleiten von Luft langsam 160,5 g oxethyliertes Trimethylolpropandiacrylat (Oxethylierungsgrad 3,7) zugetropft. Nach vollständiger Zugabe wird die Reaktionstemperatur bei 65 °C gehalten, bis ein Isocyanatgehalt von 5,7 % erreicht ist. Anschließend werden 2,63 g Zinn(II) octoat und 589,0 g thermoplastisches Polyesterurethan, mit einem mittleren Molekulargewicht $\bar{M}_W$ von 75 000 (durch Lichtstreumessung bestimmt), hervorgegangen aus der Umsetzung eines Polyesters aus Adipinsäure, aliph. Diol sowie Polyolen als Kettenverlängerungsmittel mit einem aromatischen Polyisocyanat (Impranil CHW$^R$, hergestellt von Fa. Bayer AG), gelöst in 1 414,8 g Butanon, und 530 g Butanon zugesetzt. Die Umsetzung wird solange bei 65 °C durchgeführt, bis kein Isocyanat mehr nachgewiesen werden kann. Der Festgehalt wird zu 30 % bestimmt.

Beispiel 4

Bindemittel B

In einer Rührapparatur werden bei 60 °C zu 44,4 g Isophorondiisocyanat und 0,11 g Phenothiazin unter Rühren und Durchleiten von Luft langsam 107 g Trimethylolpropan-diacrylat (Oxethylierungsgrad 3,7) zugetropft. Nach vollständiger Zugabe wird die Reaktionstemperatur bei 65 °C gehalten, bis ein Isocyanatgehalt von 5,7 erreicht ist. Anschließend werden 1,75 g Zinn(II) octoat und 772,6 g eines Polyesterurethans auf Basis von Toluylendiisocyanat (Impranil C$^R$, hergestellt von der Fa. Bayer AG) mit einem mittleren Molekulargewicht von 108500 (gelchromatographisch bestimmt), das in 1 804 g Butanon gelöst worden ist, und 353 g Butanon zugesetzt. Die Umsetzung wird solange bei 65 °C durchgeführt, bis . kein Isocyanat mehr nachgewiesen werden kann. Der Festgehalt beträgt 30 %.

Beispiel 5

Urethanaddukt

In einer Rührapparatur werden 261 g 2,4-Toluylendiisocyanat und 0,3 g Hydrochinon vorgelegt und auf 60 °C erwärmt. Anschließend werden 174 g 2-Hydroxyethylacrylat langsam zugetropft und die Reaktionsmischung wird solange bei 60 °C gehalten, bis ein Isocyanatgehalt von 14,5 % erreicht worden ist. Die Reaktionsmischung wird mit 593 g Cyclohexanon verdünnt, und es werden unter Kühlung und Durchleiten von Luft 158 g Bis-(2-hydroxyethyl) amin so zugetropft, daß die Temperatur 20 °C nicht übersteigt. Anschleißend wird bei Raumtemperatur solange nachgerührt, bis kein Isocyanat mehr nachgewiesen werden kann.

Beispiel 6

Bindemittel B

134 g eines Polyesters aus Adipinsäure und Ethylenglykol mit einer OH-Zahl von 63 (mg KOH/g Substanz), 118 g des Urethanadduktes nach Beispiel 5,4,7 g Ethylenglykol, 0,05 g Hydrochinon, 0,6 g Zinn(II) octoat und 1 300 g Cyclohexanon werden in einer Rührapparatur vorgelegt und auf 60 °C erwärmt. Unter Durchleiten von Luft werden 75 g Diphenylmethan-4,4'-diisocyanat, gelöst in 186 g Cyclohexanon, zugetropft. Es wird solange bei der angegebenen Temperatur gerührt, bis kein Isocyanat mehr nachgewiesen werden kann. Durch 2 g N,N-Dibutylamin wird die Reaktion endgültig abgestoppt. Der Festgehalt beträgt 14,2 %.

Beispiel 7

Bindemittel B

74,3 g eines Polyesters aus Adipinsäure und Butandiol — 1,4 mit einer OH-Zahl von 118 (mg KOH/g Substanz), 0,1 g Hydrochinon, 0,5 g Zinn(II) octoat und 83 g Cyclohexanon werden in einer Apparatur vorgelegt und auf 60 °C erwärmt. Unter Durchleiten von Luft werden 8,7 g Toluylendiisocyanat zugetropft. Es wird so lange bei dieser Temperatur gerührt, bis kein Isocyanat mehr nachgewiesen werden kann. Anschließend werden 50 g Diphenylmethan — 4,4'-diisocyanat, gelöst in 649 g Cyclohexanon, zugetropft und es wird so lange bei 60 °C gerührt bis ein Isocyanatgehalt von 9,5 % erreicht ist. Anschließend werden 118 g des Urethanaddukts nach Beispiel 5 und 275 g Cyclohexanon zugesetzt und es wird wieder unter Durchleiten von Luft bei 60 °C gerührt bis kein Isocyanat mehr nachgewiesen werden kann. Durch 2 g N,N-Dibutylamin wird die Reaktion endgültig abgestoppt. Der Festgehalt beträgt 14,1 %.

## Beispiel 8

Man stellt eine Magnetbeschichtungsdispersion aus folgenden Komponenten her

| | |
|---|---|
| $\gamma$-Fe$_2$O$_3$ | 100 Gew.-Teile |
| Lecithin | 3,5 Gew.-Teile |
| 30 %ige Lösung des Umsetzungsproduktes gemäß Beispiel 3 | 78,7 Gew.-Teile |
| techn. Stearinsäure | 0,2 Gew.-Teile |
| Methylethylketon | 68 Gew.-Teile |

Die Mischung wird in einem Disperser vordispergiert und in einer Rührwerkskugelmühle 3 Stunden gemahlen. Nach der Filtration wird der Beschichtungslack auf eine 15 μm-Polyesterfolie vergossen (Trockenschichtdicke 5 μm) und nach der Trocknung mit 80 kg/cm Liniendruck kalandriert. Danach wird das beschichtete Material in einer Elektronenstrahlanlage mit einer Dosis von 10 Mrad bei einer Beschleunigungsspannung von 175 kV bestrahlt und anschließend getrennt.

## Beispiel 9

Eine Magnetbeschichtungsdispersion wird durch Mischen folgender Komponenten hergestellt :

| | |
|---|---|
| $\gamma$-Fe$_2$O$_3$ | 100 Gew.-Teile |
| Lecithin | 3,5 Gew.-Teile |
| 14,1 %ige Lösung des Umsetzungsproduktes gemäß Beispiel 7 | 180 Gew.-Teile |
| techn. Stearinsäure | 0,2 Gew.-Teile |
| MEK | 90 Gew.-Teile |

Die Verarbeitung erfolgt analog Beispiel 8.

## Beispiel 10

Zur Herstellung einer Magnetbeschichtungsdispersion werden folgende Komponenten gemischt :

| | |
|---|---|
| $\gamma$-Fe$_2$O$_3$ | 100 Gew.-Teile |
| Lecithin | 3,5 Gew.-Teile |
| 35 %ige Lösung des Umsetzungsproduktes gemäß Beispiel 1 | 18,7 Gew.-Teile |
| 30 %ige Lösung des Umsetzungsproduktes gemäß Beispiel 3 | 64 Gew.-Teile |
| techn. Stearinsäure | 0,2 Gew.-Teile |
| Methylethylketon | 60 Gew.-Teile |

Die Verarbeitung erfolgt analog Beispiel 8.

## Beispiel 11

Eine Magnetbeschichtungsdispersion wird durch Mischen folgender Komponenten hergestellt :

| | |
|---|---|
| $\gamma$-Fe$_2$O$_3$ | 100 Gew.-Teile |
| Lecithin | 3,5 Gew.-Teile |
| 35 %ige Lösung des Umsetzungsproduktes gemäß Beispiel 1 | 24,6 Gew.-Teile |
| 30 %ige Lösung des Umsetzungsproduktes gemäß Beispiel 4 | 57,3 Gew.-Teile |
| techn. Stearinsäure | 0,2 Gew.-Teile |
| Methylethylketon | 60 Gew.-Teile |

Die Verarbeitung erfolgt analog Beispiel 8.

## Beispiel 12

Zur Herstellung einer Magnetbeschichtungsdispersion werden folgende Komponenten gemischt :

| | |
|---|---|
| $\gamma$-Fe$_2$O$_3$ | 100 Gew.-Teile |
| Lecithin | 3,5 Gew.-Teile |
| 30 %ige Lösung des Umsetzungs-produktes gemäß Beispiel 2 | 21,2 Gew.-Teile |
| 30 %ige Lösung des Umsetzungspro-duktes gemäß Beispiel 3 | 63,5 Gew.-Teile |
| techn. Stearinsäure | 0,2 Gew.-Teile |
| Methylethylketon | 70 Gew.-Teile |

Die Verarbeitung erfolgt analog Beispiel 8.

## Beispiel 13

Zur Herstellung einer Magnetbeschichtungsdispersion werden folgende Komponenten gemischt :

| | |
|---|---|
| $\gamma$-Fe$_2$O$_3$ | 100 Gew.-Teile |
| Lecithin | 3,5 Gew.-Teile |
| 30 %ige Lösung des Umsetzungspro-duktes gemäß Beispiel 2 | 28,2 Gew.-Teile |
| 30 %ige Lösung des Umsetzungspro-duktes gemäß Beispiel 4 | 56,3 Gew.-Teile |
| techn. Stearinsäure | 0,2 Gew.-Teile |
| Methylethylketon | 90 Gew.-Teile |

Die Verarbeitung erfolgt analog Beispiel 8.

## Vergleichsbeispiel 1

Die Magnetbeschichtungsdispersion wird aus der Mischung folgender Komponenten hergestellt :

| | |
|---|---|
| $\gamma$-Fe$_2$O$_3$ | 100 Gew.-Teile |
| Lecithin | 3,5 Gew.-Teile |
| teilhydrolysiertes Copolymerisat aus Vinylchlorid und Vinylacetat (VAGH, hergestellt von UCC Co. Ltd.) | 28,1 Gew.-Teile |
| techn. Stearinsäure | 0,2 Gew.-Teile |
| Methylethylketon | 125 Gew.-Teile |

Die Verarbeitung erfolgt analog Beispiel 8.

## Vergleichsbeispiel 2

Ein Magnetlack wird durch Mischen folgender Bestandteile hergestellt :

| | |
|---|---|
| $\gamma$-Fe$_2$O$_3$ | 100 Gew.-Teile |
| Lecithin | 3,5 Gew.-Teile |
| 30,7 %ige Lösung eines thermoplastischen Polyesterurethans (Impranil CHW$^R$, hergestellt von Fa. Bayer AG) in Ethylacetat | 77,4 Gew.-Teile |
| techn. Stearinsäure | 0,2 Gew.-Teile |
| Ethylacetat | 81 Gew.-Teile |

Die Verarbeitung erfolgt analog Beispiel 8.

Die mit Hilfe der beschriebenen olefinisch ungesättigten, strahlenhärtenden Bindemittel hergestellten Magnetdispersionen zeichnen sich durch eine praktisch unbegrenzte Topfzeit aus. Die durch Beguß dieser Magnetdispersionen auf geeignete Unterlagen gebildeten magnetischen Materialien weisen die bevorzugte Eigenschaft auf, daß sie ohne Vorvernetzung kalandert werden können. Die erfindungsgemäß hergestellten Magnetschichten sind unmittelbar nach der Bestrahlung vollständig vernetzt. Sie zeichnen sich durch geringste Klebeneigung, gegenüber herkömmlichen Systemen verbesserten mechanischen und speichertechnischen Werten, hervorragende Lösungsmittelfestigkeit und Vernetzung aus.

Der Grad der erzielten Vernetzung wird quantitativ mit Hilfe der Quelltemperaturmethode ermittelt (K. Ch. Schilffarth, Farbe + Lack 84, 13 (1978)). Das Verfahren beruht auf dem Effekt, daß sich die auf unmagnetischen Unterlagen aufgebrachten Magnetschichten nach dem Eintauchen in thermostatisierten geeigneten Lösungsmitteln nach einer gewissen Zeit plötzlich auffalten.

Die zu untersuchende Magnetbandprobe (1 cm × 2 cm) wird in ein thermostatisiertes Bad mit Cyclohexanon getaucht. Bei jeweils konstanten Badtemperaturen zwischen — 15 °C und 140 °C wird die Zeit bestimmt, die zwischen dem Eintauchen der Probe und dem plötzlichen Auffalten der Magnetschicht verstreicht. Die Badtemperatur, bei der sich exakt nach 10 Sekunden die Schicht auffaltet, wird als Quellentemperatur definiert. Sie ist ein gutes quantitatives Maß für den Vernetzungsgrad der Schicht. Die Ergebnisse sind in der nachfolgenden Tabelle 1 wiedergegeben.

Tabelle 1

| Magnetband nach Beispiel | Quelltemp (°C) | |
|---|---|---|
| | unbestrahlt | bestrahlt |
| 8 | − 5 | + 38 |
| 9 | + 5 | + 126 |
| 10 | + 4 | + 102 |
| 11 | − 10 | + 115 |
| 12 | − 12 | + 102 |
| 13 | − 3 | + 123 |
| Vergleichsbeispiel 1 | − 2 | 0 |
| Vergleichsbeispiel 2 | − 2 | − 10 |

Zur Demonstration der Elastizität der gehärteten erfindungsgemäßen Bindemittel wurden Klarlackfilme von den Bindemitteln bzw. Bindemittelkombinationen aus Lösung gezogen, nach Abdunsten des Lösungsmittels einer Elektron enbestrahlung von 5 Mrad. ausgesetzt, und die Filme wurden auf ihre Reißdehnung geprüft. Als Vergleich 3 wird ein Klarlackfilm aus einem thermoplastischen Polyurethan ([R]Impranil CHW der Fa. Bayer AG), ([R]Aronix M-8030, Produkt der Fa. Toa Gosei Kagaku Co.) und einem trifunktionellen Isocyanat ([R]Desmodur L der Fa. Bayer AG) analog Beispiel 2 der DE-OS 30 29 818 hergestellt. Als Vergleich 4 wird ein Klarlackfilm aus einem Oligoacrylat ([R]Aronix M-8030 der Fa. Toa Gosei Kagaku Co.) und einem thermoplastischen Polyurethan ([R]Estane 5702 der Fa. Goodrich Co.) gemäß DE-OS 30 29 819 hergestellt. Als Vergleich 5 wird ein Klarlackfilm gemäß der WO 81/02646 aus dem Urethanacrylaten a und g in einem Verhältnis nach Beispiel 1 der angeführten Patentanmeldung hergestellt. Die Ergebnisse gibt Tabelle 2 wieder.

Tabelle 2

| Bindemittel nach | Verhältnis | Reißdehnung % |
|---|---|---|
| Bsp.1/Bsp.3 | 1:3 | 102 |
| Bsp.2/Bsp.3 | 1:3 | 114 |
| Bsp.2/Bsp.6 | 1:3 | 111 |
| Bsp.2/Bsp.4 | 1:2 | 108 |
| Vergleich 3 | − | 3 |
| Vergleich 4 | − | 11 |
| Vergleich 5 | − | 79 |

# 0 084 797

**Patentansprüche**

1. Verfahren zur Herstellung eines magnetischen Speichermediums, bestehend im wesentlichen aus einem Schichtträger und einer magnetische Pigmente enthaltenden Schicht, die Bindemittel enthält, die aus $\alpha,\beta$-olefinisch ungesättigten, strahlenhärtbaren Polymeren hervorgegangen sind, dadurch gekennzeichnet, daß ein Bindemittel B verwendet wird, das ein über Urethan-, Allophan- und/oder Harnstoffbrücken kettenend- und kettenseitenständig Acryloyl- und/oder Methacryloylgruppen aufweisendes Polyurethan mit einem mittleren Molekulargewicht $\bar{M}_W$ von 10 000 bis 200 000 (Gewichtsmittel) ist, oder daß das vorstehend genannte Bindemittel B in Kombination mit einem an sich bekannten Bindemittel A eingesetzt wird, das ein Acryloyl- und/oder Methacryloylgruppen enthaltendes Polymeres ist und durch Umsetzung eines aktiven Wasserstoff enthaltenden Polymeren mit einem mittleren Molekulargewicht $\bar{M}_W$ von 10 000 bis 200 000 (Gewichtsmittel) und einem polyfunktionellen Isocyanat und einem Hydroxyalkylacrylat und/oder Hydroxyalkylmethacrylat und/oder Oligoacrylat und/oder Oligomethacrylat hervorgegangen ist, und daß die Bindemittel und magnetisches Pigment enthaltende Dispersion durch Elektronenstrahlen gehärtet wird.

2. Verfahren zur Herstellung eines magnetischen Speichermediums nach Anspruch 1, dadurch gekennzeichnet, daß das aktiven Wasserstoff enthaltende Polymere mindestens ein Alkydharz, gesättigter Polyester, ungesättigter Polyester, Polyether, Polyepoxid, Polyacrylat, Phenolharz, Polyaminharz, Melaminaldehydharz, Harnstoffaldehydharz, Silikonharz, eine Cellulose, ein Cellulosederivat, partiell verseiftes Vinylchlorid-Vinylester-Copolymerisat oder ein Copolymerisat von Vinylchlorid und Allylalkohol oder Hydroxyalkyl(meth) acrylat ist.

3. Verfahren zur Herstellung eines magnetischen Speichermediums nach Anspruch 1, dadurch gekennzeichnet, daß die polyfunktionellen Isocyanate aus wenigstens einem Toluylen-, Diphenylmethan-, Isophoron-, Xylen-, Hexamethylendiisocyanat, Triphenylmethantriisocyanat, dem Reaktionsprodukt von Trimethylolpropan und einem Diisocyanat im Verhältnis 1 : 3 oder einem Triisocyanat, das durch Reaktion von Diisocyanaten mit Wasser erhalten wird, bestehen.

4. Verfahren zur Herstellung eines magnetischen Speichermediums nach' Anspruch 1, dadurch gekennzeichnet, daß die Hydroxyalkyl(meth) acrylate und/oder Oligo(meth) acrylate aus wenigstens einem 2-Hydroxyethyl-, 2-Hydroxypropyl-, 2-Hydroxybutyl-, 3-Hydroxypropyl-, 4-Hydroxybutyl-, 3-Chlor-2-hydroxypropyl-, 6-Hydroxyhexyl(meth) acrylat, Glycerin-, Trimethylolpropandi(meth) acrylat, Pentaerythrittri(meth) acrylat sowie den entsprechenden oxethylierten oder oxpropylierten (Meth) Acrylaten bestehen.

5. Verfahren zur Herstellung eines magnetischen Speichermediums nach Anspruch 1-4, dadurch gekennzeichnet, daß die als Bindemittel A verwendeten (meth) acryloylhaltigen Polymere Reaktionsprodukte sind aus einer ersten Umsetzung eines polyfunktionellen Isocyanats mit einem Hydroxyalkyl(meth) acrylat und/oder Oligo(meth) acrylat in einem solchen Verhältnis, daß lediglich eine Isocyanatgruppe pro Molekül verbleibt, und anschließender Umsetzung mit einem aktiven Wasserstoff enthaltenden Polymer.

6. Verfahren zur Herstellung eines magnetischen Speichermediums nach Anspruch 1-5 dadurch gekennzeichnet, daß Kombinationen aus Polyisocyanaten und Hydroxyalkyl(meth) acrylaten und/oder Oligo(meth) acrylaten verwendet werden, die zu 2 bis 3 (Meth)Acryloylgruppen pro umgesetzten aktiven Wasserstoff des Polymeren führen.

7. Verfahren zur Herstellung eines magnetischen Speichermediums nach Anspruch 1, dadurch gekennzeichnet, daß das (Meth) Acryloylgruppen enthaltende Polyurethan durch Umsetzung eines aktiven Wasserstoff enthaltenden Polyurethans mit einem polyfunktionellen Isocyanat und einem eine Hydroxylgruppe pro Molekül enthaltenden Hydroxyalkyl(meth) acrylat und/oder Oligo(meth) acrylat erhalten wird.

8. Verfahren zur Herstellung eines magnetischen Speichermediums nach Anspruch 1 und 7, dadurch gekennzeichnet, daß die als Bindemittel B verwendeten (meth) acryloylhaltigen Polyurethane Reaktionsprodukte sind aus einer ersten Umsetzung eines polyfunktionellen Isocyanats mit einem eine Hydroxylgruppe pro Molekül enthaltenden Hydroxyalkyl(meth) acrylat und/oder Oligo(meth) acrylat in einem solchen Verhältnis, daß lediglich eine Isocyanatgruppe pro Molekül verbleibt und anschließender Umsetzung mit einem aktiven Wasserstoff enthaltenden Polyurethan.

9. Verfahren zur Herstellung eines magnetischen Speichermediums nach Anspruch 1, dadurch gekennzeichnet, daß die als Bindemittel B verwendeten (meth) acryloylhaltigen Polyurethane durch Polyadditionsreaktionen von difunktionellen Isocyanaten und kettenverlängernd wirkenden Urethan(meth) acrylaten, die durch Umsetzung eines wenigstens difunktionellen Isocyanats mit einem eine Hydroxylgruppe pro Molekül enthaltenden Hydroxyalkyl(meth) acrylat und/oder Oligo(meth) acrylat und anschließend einer bezüglich aktiver Wasserstoffatome, trifunktionelle Verbindung erhalten wird und gegebenenfalls mit einer, bezüglich aktiver Wasserstoffatome, kettenverlängernd wirkenden difunktionellen und gegebenenfalls geringe Mengen einer verzweigend wirkenden trifunktionellen Verbindung erzeugt werden.

10. Verfahren zur Herstellung eines magnetischen Speichermediums nach Anspruch 1, dadurch gekennzeichnet, daß die als Bindemittel B verwendeten (meth) acryloylhaltigen Polyurethane durch Polyadditionsreaktionen unter Verwendung von difunktionellen Isocyanaten erhalten werden, die durch Umsetzung eines wenigstens trifunktionellen Isocyanats mit einem eine Hydroxylgruppe pro Molekül enthaltenden Hydroxyalkyl(meth) acrylat und/oder Oligo(meth) acrylat, in einem solchen Verhältnis, daß zwei Isocyanatgruppen pro Molekül erhalten bleiben, hergestellt werden.

11. Verfahren zur Herstellung eines magnetischen Speichermediums nach Anspruch 1 bis 10, dadurch gekennzeichnet, daß das magnetische Pigment γ-Eisenoxid, Magnetit, Mischphasen aus Magnetit, γ-Eisenoxide, Co-dotiertes Eisenoxid, Ferrit, Chromdioxid, metallisches Pigment wie Reineisen und/oder dessen Legierungen ist.

12. Verfahren zur Herstellung eines magnetischen Speichermediums nach Anspruch 1 bis 11, dadurch gekennzeichnet, daß die Bindemittel durch Elektronenstrahlen mit einer Strahlendosis von 0,5 bis 10 Mrad ausgehärtet werden.

13. Verfahren zur Herstellung eines magnetischen Speichermediums nach Anspruch 12, dadurch gekennzeichnet, daß die Bindemittel mit einer Beschleunigerspannung von mindestens 100 kV ausgehärtet werden.

**Claims**

1. Process for the production of a magnetic storage medium consisting essentially of a layer support and a layer which contains magnetic pigments and binders which have been obtained from $\alpha,\beta$-olefinically unsaturated, radiation-hardenable polymers, characterised in that a binder B is used which is a polyurethane which contains acryloyl and/or methacryloyl groups positioned at the chain ends and sides via urethane, allophane and/or urea bridges and has an average molecular weight $\bar{M}_W$ of 10,000 to 200,000 (weight average), or in that the aforementioned binder B is used in combination with a binder A known per se which is a polymer containing acryloyl and/or methacryloyl groups and has been obtained by reacting a polymer containing active hydrogen and having an average molecular weight $\bar{M}_W$ of 10,000 to 200,000 (weight average) and a polyfunctional isocyanate and a hydroxyalkylacrylate and/or hydroxyalkylmethacrylate and/or oligoacrylate and/or oligomethacrylate, and in that the dispersion containing binders and magnetic pigment is hardened by electron rays.

2. Process for the production of a magnetic storage medium according to Claim 1, characterised in that the polymer containing active hydrogen is at least one alkyd resin, saturated polyester, unsaturated polyester, polyether, polyepoxide, polyacrylate, phenol resin, polyamine resin, melamine-aldehyde resin, urea-aldehyde resin, silicone resin, a cellulose, a cellulose derivative, a partially saponified vinyl chloride-vinyl ester copolymer or a copolymer of vinyl chloride and allyl alcohol or hydroxyalkyl(meth) acrylate.

3. Process for the production of a magnetic storage medium according to Claim 1, characterised in that the polyfunctional isocyanates consist of at least one toluylene, diphenylmethane, isophorone, xylene or hexamethylene diisocyanate, or triphenylmethane triisocyanate, the reaction product of trimethylolpropane and a diisocyanate in a ratio of 1 : 3 or a triisocyanate which is obtained by reacting diisocyanates with water.

4. Process for the production of a magnetic storage medium according to Claim 1, characterised in that the hydroxyalkyl(meth) acrylates and/or oligo(meth) acrylates consist of at least one 2-hydroxyethyl, 2-hydroxypropyl, 2-hydroxybutyl, 3-hydroxypropyl, 4-hydroxybutyl, 3-chloro-2-hydroxypropyl or 6-hydroxyhexyl(meth) acrylate, or glycerol or trimethylolpropane di(meth) acrylate, or pentaerythritol tri(meth) acrylate and the corresponding ethoxylated or propoxylated(meth) acrylates.

5. Process for the production of a magnetic storage medium according to Claium 1-4, characterised in that the (meth) acryloyl-containing polymers used as binder A are reaction products of a first reaction of a polyfunctional isocyanate with a hydroxyalkyl(meth) acrylate and/or oligo(meth) acrylate in such a ratio that only one isocyanate group remains per molecule, and a subsequent reaction with a polymer containing active hydrogen.

6. Process for the production of a magnetic storage medium according to Claim 1-5, characterised in that combinations of polyisocyanates and hydroxyalkyl(meth) acrylates and/or oligo(meth) acrylates are used which result in 2 to 3 (meth) acryloyl groups per reacted active hydrogen of the polymer.

7. Process for the production of a magnetic storage medium according to Claim 1, characterised in that the polyurethane containing (meth) acryloyl groups is obtained by reacting a polyurethane containing active hydrogen with a polyfunctional isocyanate and a hydroxyalkyl(meth) acrylate and/or oligo(meth) acrylate containing one hydroxyl group per molecule.

8. Process for the production of a magnetic storage medium according to Claim 1 and 7, characterised in that the (meth)-acryloyl-containing polyurethanes used as binder B are reaction products of a first reaction of a polyfunctional isocyanate with a hydroxyalkyl(meth) acrylate and/or oligo(meth) acrylate containing one hydroxyl group per molecule in such a ratio that only one isocyanate group remains per molecule and a subsequent reaction with a polyurethane containing active hydrogen.

9. Process for the production of a magnetic storage medium according to Claim 1, characterised in that the (meth) acryloyl-containing polyurethanes used as binder B are produced by polyaddition reactions of difunctional isocyanates and chain-lengthening urethane (meth) acrylates which are obtained by reacting an at least difunctional isocyanate with a hydroxyalkyl(meth) acrylate and/or oligo(meth) acrylate containing one hydroxyl group per molecule and subsequently with a compound which is trifunctional with respect to active hydrogen atoms and optionally with a compound which is, with respect to active hydrogen atoms, a chain-lengthening difunctional compound and optionally small amounts of a branching trifunctional compound.

10. Process for the production of a magnetic storage medium according to Claim 1, characterised in that the (meth) acryloyl-containing polyurethanes used as binder B are obtained by polyaddition reactions using difunctional isocyanates which are produced by reacting an at least trifunctional isocyanate with a hydroxyalkyl(meth) acrylate and/or oligo(meth) acrylate containing one hydroxyl group per molecule, in such a ratio that two isocyanate groups remain per molecule.

11. Process for the production of a magnetic storage medium according to Claim 1 to 10, characterised in that the magnetic pigment is $\gamma$-iron oxide, magnetite, mixed phases of magnetite, $\gamma$-iron oxides, Co-doped iron oxide, ferrite, chromium dioxide, a metallic pigment such as soft iron and/or alloys thereof.

12. Process for the production of a magnetic storage medium according to Claim 1 to 11, characterised in that the binders are cured by electron rays with a radiation dose of 0.5 to 10 Mrad.

13. Process for the production of a magnetic storage medium according to Claim 12, characterised in that the binders are cured with an accelerator voltage of at least 100 kV.

## Revendications

1. Procédé de production d'un milieu magnétique d'enregistrement, principalement constitué d'un support de couche et d'une couche contenant des pigments magnétiques, qui contient des liants qui proviennent de polymères radiodurcissables à non-saturation, $\alpha,\beta$-oléfinique, caractérisé en ce qu'on utilise un liant B qui est un polyuréthanne de poids moléculaire moyen $\bar{M}_p$ allant de 10 000 à 200 000 (moyenne en poids), portant des groupes acryloyle et/ou méthacryloyle en bout de chaîne et en chaîne latérale par l'intermédiaire de ponts uréthanne, allophane et/ou urée, ou en ce que le liant B mentionné ci-dessus est utilisé en association avec un liant A connu qui est un polymère porteur de groupes acryloyle et/ou méthacryloyle et qui est produit par réaction d'un polymère porteur d'hydrogène actif ayant un poids moléculaire moyen $\bar{M}_p$ de 10 000 à 200 000 (moyenne en poids) avec un isocyanate polyfonctionnel et un acrylate d'hydroxyalkyle et/ou un méthacrylate d'hydroxyalkyle et/ou un oligoacrylate et/ou un oligométhacrylate, et en ce que la dispersion contenant les liants et le pigment magnétique est durcie par un flux d'électrons.

2. Procédé de production d'un milieu magnétique d'enregistrement suivant la revendication 1, caractérisé en ce que le polymère contenant de l'hydrogène actif est au moins une résine alkyd, un polyester saturé, un polyester insaturé, un polyéther, un polyépoxyde, un polyacrylate, une résine phénolique, une résine polyaminée, une résine mélamine-aldéhyde, une résine urée-aldéhyde, une résine de silicone, une cellulose, un dérivé de cellulose, un copolymère de chlorure de vinyle et d'ester de vinyle partiellement saponifié ou un copolymère de chlorure de vinyle et d'alcool allylique ou de (méth) acrylate d'hydroxyalkyle.

3. Procédé de production d'un milieu magnétique d'enregistrement suivant la revendication 1, caractérisé en ce que les isocyanates polyfonctionnels sont constitués d'au moins un diisocyanatotoluène, diisocyanatodiphénylméthane, isophoronediisocyanate, diisocyanatoxylène, hexaméthylènediisocyanate, triisocyanatotriphénylméthane, du produit de réaction du triméthylolpropane et d'un diisocyanate dans le rapport de 1 : 3 ou d'un triisocyanate qui est obtenu par réaction de diisocyanates avec l'eau.

4. Procédé de production d'un milieu magnétique d'enregistrement suivant la revendication 1, caractérisé en ce que les (méth) acrylates d'hydroxyalkyle et/ou les oligo(méth) acrylates sont constitués d'au moins un (méth) acrylate de 2-hydroxyéthyle, 2-hydroxypropyle, 2-hydroxybutyle, 3-hydroxypropyle, 4-hydroxubutyle, 3-chloro-2-hydroxypropyle, 6-hydroxyhexyle, (méth) acrylate de glycérol, de triméthylolpropane, tri(méth) acrylate de pentaérythritol ainsi que des (méth) acrylates oxéthylés ou oxypropylés correspondants.

5. Procédé de production d'un milieu magnétique d'enregistrement suivant les revendications 1 à 4, caractérisé en ce que les polymères porteurs de groupes (méth) acryloyle utilisés comme liant A sont des produits réactionnels obtenus par une première réaction d'un isocyanate polyfonctionnel avec un (méth)-acrylate d'hydroxyalkyle et/ou un oligo(méth) acrylate dans un rapport choisi de manière qu'il reste simplement un groupe isocyanato par molécule, puis réaction avec un polymère contenant de l'hydrogène actif.

6. Procédé de production d'un milieu magnétique d'enregistrement suivant les revendications 1 à 5, caractérisé en ce qu'on utilise des associations de polyisocyanates, de (méth) acrylates d'hydroxyalkyle et/ou d'oligo(méth) acrylates qui conduisent à 2-3 groupes (méth) acryloyle par hydrogène actif du polymère ayant réagi.

7. Procédé de production d'un milieu magnétique d'enregistrement suivant la revendication 1, caractérisé en ce que le polyuréthanne porteur de groupes (méth) acryloyle est obtenu par réaction d'un polyuréthanne contenant de l'hydrogène actif avec un isocyanate polyfonctionnel et un (méth) acrylate d'hydroxyalkyle et/ou un oligo(méth) acrylate contenant un groupe hydroxyle par molécule.

8. Procédé de production d'un milieu magnétique d'enregistrement suivant les revendications 1 à 7, caractérisé en ce que les polyuréthannes contenant des groupes (méth) acryloyle utilisés comme liant B sont des produits réactionnels obtenus par une première réaction d'un isocyanate polyfonctionnel avec un (méth) acrylate d'hydroxyalkyle et/ou un oligo(méth) acrylate contenant un groupe hydroxyle par molécule dans un rapport choisi de manière qu'il reste un seul groupe isocyanato par molécule, puis réaction avec un polyuréthanne contenant de l'hydrogène actif.

9. Procédé de production d'un milieu magnétique d'enregistrement suivant la revendication 1, caractérisé en ce que les polyuréthannes porteurs de groupes (méth) acryloyle utilisés comme liants B sont obtenus par des réactions de polyaddition d'isocyanates difonctionnels et de (méth) acrylates d'uréthanne à effet d'allongement de chaîne, qui sont obtenus par réaction d'un isocyanate au moins -difonctionnel avec un (méth) acrylate d'hydroxyalkyle et/ou un oligo(méth) acrylate portant un groupe hydroxyle par molécule, puis d'un composé trifonctionnel relativement aux atomes actifs d'hydrogène, et le cas échéant avec un composé difonctionnel vis-à-vis d'atomes actifs d'hydrogène, à effet d'allongement de chaîne, et le cas échéant de faibles quantités d'un composé trifonctionnel à effet ramificateur.

10. Procédé de production d'un milieu magnétique d'enregistrement suivant la revendication 1, caractérisé en ce que les polyuréthannes porteurs de groupes (méth) acryloyle utilisés comme liant B sont obtenus par des réactions de polyaddition avec utilisation d'isocyanates difonctionnels qui sont produits par réaction d'un isocyanate au moins trifonctionnel avec un (méth) acrylate d'hydroxyalkyle et/ou un oligo(méth) acrylate contenant un groupe hydroxyle par molécule, dans un rapport tel qu'il reste deux groupes isocyanato par molécule.

11. Procédé de production d'un milieu magnétique d'enregistrement suivant les revendications 1 à 10, caractérisé en ce que le pigment magnétique est formé d'oxyde de fer γ, de magnétite, de phases mixtes de magnétite, d'oxydes de fer γ, d'oxyde de fer dopé au cobalt, de ferrite, de dioxyde de chrome, d'un pigment métallique tel que le fer pur et/ou ses alliages.

12. Procédé de production d'un milieu magnétique d'enregistrement suivant les revendications 1 à 11, caractérisé en ce que les liants sont durcis par un flux d'électrons avec une dose d'irradiation de 0,5 à 10 Mrads.

13. Procédé de production d'un milieu magnétique d'enregistrement suivant la revendication 12, caractérisé en ce que les liants sont durcis avec une tension d'accélération d'au moins 100 kV.